Europäisches Patentamt

European Patent Office

Office européen des brevets

(19)

(11) **EP 0 623 238 B1**

(12)

# FASCICULE DE BREVET EUROPEEN

(45) Date de publication et mention
de la délivrance du brevet:
**25.09.1996 Bulletin 1996/39**

(21) Numéro de dépôt: **93904101.8**

(22) Date de dépôt: **20.01.1993**

(51) Int Cl.⁶: **G09B 21/00**, H04R 25/00

(86) Numéro de dépôt international:
**PCT/FR93/00056**

(87) Numéro de publication internationale:
**WO 93/14482 (22.07.1993 Gazette 1993/18)**

(54) **APPAREIL CONVERTISSEUR AUDIOFREQUENCE PERFECTIONNE, INSTALLATION POUR LE TRAITEMENT DE SUJETS COMPRENANT UN TEL APPAREIL ET PROCEDE METTANT EN UVRE UNE TELLE INSTALLATION**

VERBESSERTES WANDLUNGSGERAET FUER AUDIOSIGNALE, ANLAGE ZUR BEHANDLUNG VON PATIENTEN MIT EINEM SOLCHEN GERAET UND VERFAHREN ZUM BETRIEB EINER DERARTIGEN ANLAGE

ADVANCED AUDIO-FREQUENCY CONVERTER, EQUIPMENT COMPRISING SAID CONVERTER FOR TREATING PATIENTS, AND METHOD OF USING SAID EQUIPMENT

(84) Etats contractants désignés:
**AT BE CH DE ES FR GB IE IT LI NL PT**

(30) Priorité: **21.01.1992 FR 9200603**

(43) Date de publication de la demande:
**09.11.1994 Bulletin 1994/45**

(73) Titulaire: **BELLER, Isi**
**F-75006 Paris (FR)**

(72) Inventeurs:
• **BELLER, Isi**
**F-75006 Paris (FR)**

• **FRADIN, Boris**
**F-77123 Noisy-sur-Ecole (FR)**

(74) Mandataire: **Plaçais, Jean-Yves et al**
**Cabinet Netter,**
**40, rue Vignon**
**75009 Paris (FR)**

(56) Documents cités:
**FR-A- 2 495 361          FR-A- 2 568 437**

# Description

L'invention se rapporte à une installation pour l'apprentissage audio-phonatoire, notamment pour le traitement par voie auditive des troubles audiophonatoires présentés par certains sujets, en règle générale par le jeune enfant.

On connaît déjà des installations pour le traitement de sujets atteints de troubles audiophonatoires. En particulier, dans son Brevet français No 84 12019 publié sous le No 2 568 437, le Demandeur propose une installation comprenant un appareil convertisseur audiofréquence propre à élaborer, à partir d'un signal audiofréquence arrivant à l'entrée, un signal paramétrique destiné à être appliqué, par l'intermédiaire d'un transducteur électro-acoustique, à une personne à traiter. Plus précisément, l'appareil convertisseur audiofréquence comporte :

- des moyens formant amplificateur d'entrée ;

- des premiers moyens formant détecteur à seuil reliés à la sortie des moyens formant amplificateur d'entrée et retranchant d'un seuil la tension fournie par celui-ci, après redressement ;

- des seconds moyens formant détecteur à seuil également reliés à la sortie des moyens formant amplificateur d'entrée, ajoutant à un seuil la tension fournie par celui-ci, après redressement, et possédant une constante de temps au moins égale à celle des premiers moyens formant détecteur ;

- des moyens formant oscillateur commandés en tension, reliés à la sortie des premiers moyens formant détecteur à seuil ; et

- des moyens formant modulateur dont les entrées sont respectivement reliées aux sorties des premiers et seconds moyens formant détecteur à seuil et des moyens formant oscillateur, et dont la sortie fournit ledit signal paramétrique.

L'installation antérieure n'ayant donné qu'imparfaitement satisfaction, la présente invention vient en offrir un perfectionnement.

La présente invention porte sur un appareil convertisseur audiofréquence du type mentionné ci-avant.

Selon une caractéristique générale de l'invention, au moins l'une des caractéristiques du groupe formé par l'amplitude et la fréquence du signal paramétrique varient en fonction d'au moins l'une des caractéristiques du groupe formé par le logarithme de l'amplitude et de la fréquence du signal audiofréquence, ce qui permet d'obtenir un signal paramétrique agréable à entendre par le sujet à traiter.

Selon un mode de réalisation préféré de la présente invention, l'un au moins des premiers et seconds moyens formant détecteur de seuil comprend au moins un réseau à diode et à résistance pour faire varier l'amplitude et/ou la fréquence du signal paramétrique en fonction du logarithme de l'amplitude et/ou de la fréquence du signal audiofréquence.

En vue encore de délivrer un signal paramétrique efficace du point de vue clinique, qui ne soit pas trop désagréable à entendre par le sujet à traiter, il est prévu que la ou les constantes de temps des premiers et/ou seconds détecteurs de seuil soit une fonction croissante de la fréquence du signal audiofréquence.

Selon un aspect de l'invention, le signal paramétrique est un signal complexe comprenant une fréquence fondamentale et une pluralité de fréquences harmoniques et les moyens formant modulateur sont équipés de moyens de filtrage propres à filtrer au moins en partie lesdites fréquences harmoniques.

En pratique, les moyens de filtrage comprennent un filtre de type passe-bas relié à la sortie des moyens formant modulateur.

Selon une variante de la présente invention, les moyens formant oscillateur émettent un signal rectangulaire dont le facteur de forme est de l'ordre de 0,5, ce qui permet de supprimer les fréquences harmoniques paires du signal paramétrique.

Avantageusement, pour certains cas de rééducation, le signal audiofréquence est haché à une cadence choisie de silences d'une durée prédéterminée.

Avantageusement, il est prévu d'ajuster la ou les constantes de temps des premiers et/ou seconds détecteurs de seuil pour qu'elles restent inférieures à une valeur prédéterminée, laquelle valeur étant représentative d'une séquenciation rythmique tenant compte des phonèmes constituant le signal audiofréquence.

L'invention a également pour objet une installation pour le traitement de sujets atteints de troubles audiophonatoires comprenant un appareil convertisseur audiofréquence selon les caractéristiques mentionnées ci-avant.

En pratique, l'installation comporte, à l'entrée du convertisseur, un commutateur d'entrée susceptible d'être relié à un lecteur de sons et/ou à un ou plusieurs microphones, et à la sortie du convertisseur, un commutateur de sortie susceptible d'être relié à une chaîne de reproduction sonore et/ou à un enregistreur de sons.

En variante, le commutateur de sortie reçoit en outre du signal paramétrique issu du convertisseur, le signal audiofréquence haché à une cadence choisie de silences d'une durée prédéterminée.

L'invention a également pour objet un procédé de traitement de sujets atteints de troubles audiophonatoires mettant en oeuvre l'installation mentionnée ci-avant.

Selon une caractéristique essentielle de l'invention, le procédé comprend les étapes suivantes :

a) injecter dans chaque oreille du sujet à traiter un mélange de sons compréhensibles et de sons paramétriques fournis par l'installation ; les sons compréhensibles susceptibles d'être hachés à une cadence choisie de silences d'une durée prédéterminée ;

b) amplifier ou enregistrer les signaux sonores émis par le sujet à traiter en réponse à cette injection ;

c) appliquer le signal audiofréquence ainsi amplifié ou enregistré à l'installation pour le convertir en signal paramétrique ;

d) injecter à nouveau dans chaque oreille du sujet à traiter un mélange formé de sons compréhensibles et du signal paramétrique ainsi converti.

Avantageusement, il est prévu alors d'équiper l'installation de moyens formant mélangeur-sommateur comprenant une première entrée recevant le signal audiofréquence préalablement stocké sur un support de sons ; une seconde entrée recevant le transformé paramétrique du signal audiofréquence ainsi stocké ; une troisième entrée recevant le signal audiofréquence issu d'un microphone destiné au sujet à traiter ; une quatrième entrée recevant le transformé paramétrique du signal issu du microphone du sujet à traiter ; une cinquième entrée recevant le signal audiofréquence issu d'un microphone destiné à l'utilisateur de l'installation (médecin par exemple) ; et une sixième entrée recevant le transformé paramétrique du signal audiofréquence issu du microphone de l'utilisateur.

De préférence, il est prévu d'utiliser deux mélangeurs-sommateurs indépendants, un pour chaque oreille du sujet à traiter.

D'autres caractéristiques et avantages de l'invention apparaîtront à l'examen de la description détaillée ci-après, et des dessins annexés, sur lesquels :

- la figure 1 est un schéma de principe de l'installation selon l'invention ;

- la figure 2 est un schéma électrique détaillé du convertisseur audiofréquence selon l'invention ;

- la figure 3 est un schéma électrique d'une variante du convertisseur selon l'invention ;

- la figure 4 est un schéma électrique partiellement détaillé du commutateur de sortie de l'installation selon invention ;

- les figures 5A à 5C sont des chronogrammes illustrant le fonctionnement de l'installation décrite en référence à la figure 4 ; et

- la figure 6 est un schéma électrique partiellement détaillé du commutateur de sortie selon l'invention.

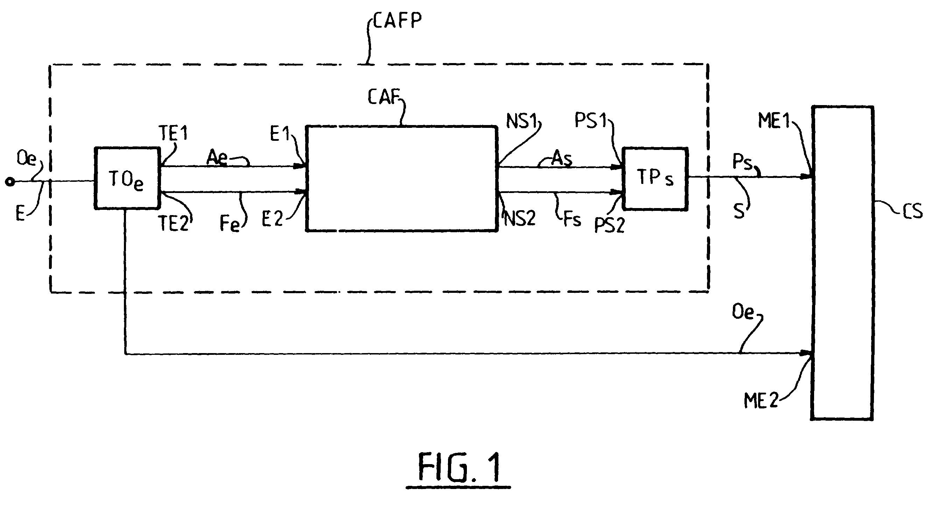

La figure 1 illustre, sous la référence générale CAFP, un convertisseur paramétrique. Dans le présent cas, ce convertisseur est un convertisseur audiofréquence. Il comporte une entrée E et une sortie S.

L'entrée E reçoit un signal audiofréquence Oe véhiculant des sons naturels, c'est-à-dire un signal audiofréquence verbal, ou vocal, ou musical, qui peut être produit aussi bien par un sujet normal que par le sujet à traiter ou par une source musicale.

Le signal naturel est appliqué à un étage TOe dont les sorties TE1 et TE2 sont appliquées respectivement aux entrées E1 et E2 d'un appareil convertisseur audiofréquence CAF.

La sortie TE1 délivre un signal Ae représentatif de l'amplitude du signal naturel tandis que la sortie TE2 délivre un signal FE représentatif de la fréquence du signal naturel.

Le convertisseur audiofréquence CAF que l'on décrira plus en détail ci-après comporte deux sorties NS1 et NS2 reliées respectivement aux entrées PS1 et PS2 d'un étage amplificateur TPS qui délivre à sa sortie S le signal paramétrique PS.

Il est à remarquer que la sortie NS1 délivre un signal As représentatif de l'amplitude du signal paramétrique tandis que la sortie NS2 délivre un signal Fs représentatif de la fréquence du signal paramétrique.

En sortie, il est prévu d'équiper l'installation d'un commutateur ou additionneur de sortie CS recevant à sa première entrée ME1 le signal paramétrique PS et à sa seconde entrée MS2 le signal naturel Oe.

Le Demandeur a constaté qu'en faisant varier l'amplitude As et/ou la fréquence Fs du signal paramétrique Ps en fonction de l'amplitude Ae et/ou de la fréquence Fe du signal audiofréquence Oe, le signal paramétrique obtenu à la sortie S comporte des propriétés permettant d'améliorer l'installation décrite dans le Brevet précédent mentionné ci-avant.

Plus précisément, le Demandeur a constaté qu'en appliquant un signal paramétrique vérifiant au niveau de sa fréquence Fs et de son amplitude As l'équation jointe en annexe, le signal paramétrique est plus agréable à entendre par le sujet à traiter et procure de meilleurs résultats dans une rééducation que l'on décrira plus en détail ci-après, utilisant un tel signal paramétrique.

Plus précisément, le Demandeur a constaté qu'en faisant varier l'amplitude As et/ou la fréquence Fs du signal paramétrique Ps en fonction du logarithme de l'amplitude Ae et/ou de la fréquence Fe du signal audiofréquence Oe, le signal paramétrique Ps est encore plus agréable à entendre par le sujet à traiter.

L'homme de l'art comprendra que le sujet à traiter a une sensation agréable lorsqu'il entend un signal paramétrique ainsi modulé dans la mesure où la sensibilité de l'oreille humaine est également une fonction logarithmique de l'amplitude et/ou de la fréquence du signal sonore.

L'homme de l'art comprendra également ici que la variation de l'amplitude As et/ou de la fréquence Fs du signal paramétrique en fonction de l'amplitude Ae et/ou de la fréquence Fe du signal audiofréquence peut être obtenue soit par des moyens numériques soit analogiques.

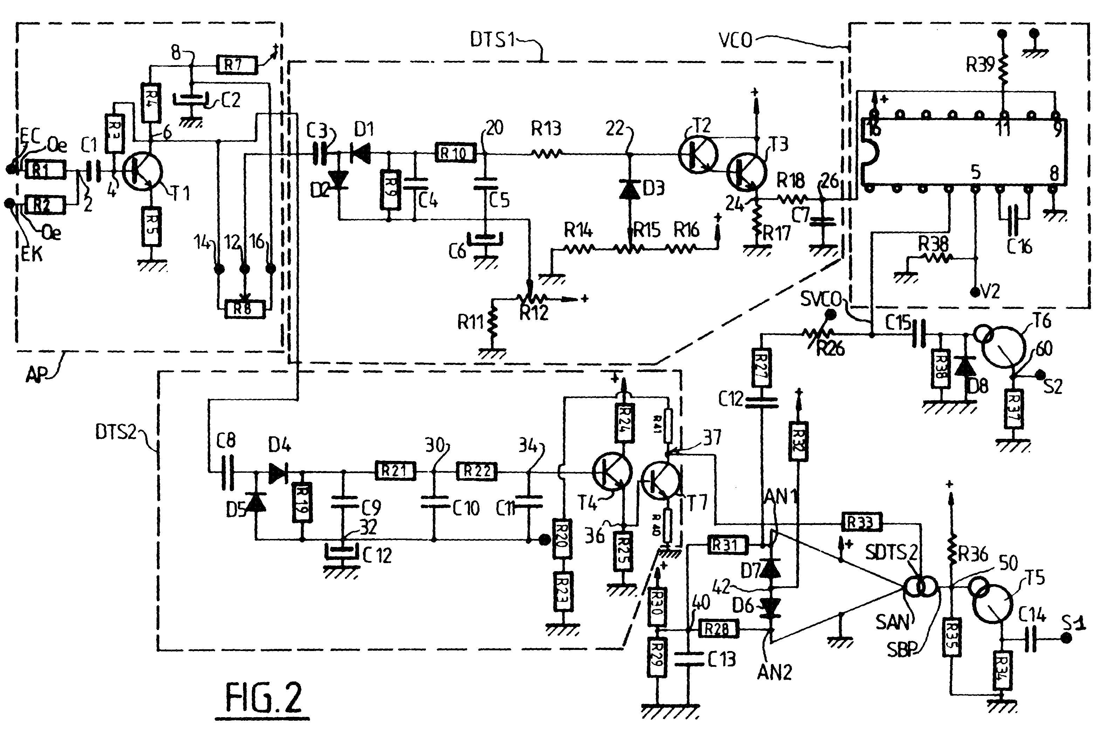

Nous faisons maintenant référence à la figure 2 qui illustre schématiquement un mode de réalisation de type analogique du convertisseur décrit en référence à la figure 1.

Le signal naturel d'entrée Oe est appliqué à l'entrée d'un étage amplificateur AP, à large bande, et dont la sortie 12 est définie par un organe de réglage de niveau constitué ici d'un potentiomètre R8.

Il est à remarquer ici que le signal d'entrée Oe peut provenir d'un support de reproduction de sons tel qu'une cassette (ici par l'entrée EK à travers une résistance R2) ou encore par l'intermédiaire d'un microphone (ici par l'entrée EC à travers une résistance R1), l'une des extrémités de la résistance R1 et l'une des extrémités de la résistance R2 sont reliées à un noeud commun 2.

L'étage amplificateur AP est fondé sur un transistor T1 monté selon le type émetteur commun. L'étage amplificateur d'entrée AP amplifie ici la tension et la puissance du signal naturel Oe. Le curseur 12 du potentiomètre R8 est relié à un premier dispositif détecteur à seuil référencé DTS1. L'une des extrémités 14 du potentiomètre R8 est reliée à un second dispositif détecteur à seuil référencé DTS2. L'autre extrémité 16 du potentiomètre R8 est relié au pôle positif 8 d'alimentation, filtrée par la résistance R7 et le condensateur C2.

L'émetteur du transistor T1 est mis à la masse à travers la résistance R5. L'homme de l'art comprendra que la valeur ohmique de la résistance R5 constitue la valeur de la contre-réaction. Le collecteur du transistor T1 est alimenté à travers les résistances R7 et R4 qui sont montées en série. La résistance R3 polarise la base du transistor T1 au noeud 4.

L'extrémité 16 du potentiomètre R8 est reliée à un noeud 8, commun à une armature d'un condensateur C2 dont l'autre armature est reliée à la masse à l'une des extrémités de la résistance R4 et à l'une des extrémités de la résistance R7. La base du transistor T1 reçoit le signal d'entrée Oe à travers un condensateur C1. L'une des armatures du condensateur C1 est reliée à un noeud 4 qui reçoit l'une des extrémités de la résistance R3 montée entre la base et le collecteur du transistor T1 tandis que l'autre armature du condensateur C1 est reliée au noeud 2. L'une des extrémités de la résistance R3 et l'une des extrémités de la résistance R4 sont reliées à un noeud commun 6, relié au collecteur du transistor T1.

L'homme de l'art comprendra que le montage amplificateur AP permet d'amplifier le signal naturel Oe tant en puissance qu'en tension.

Le détecteur à seuil DTS1 comprend à partir de son entrée 12, un condensateur C3, dont l'autre armature est reliée d'une part à la cathode d'une diode D1, et d'autre part à l'anode d'une diode D2. La cathode de la diode D2 aboutit au curseur d'un potentiomètre R12, recevant à l'une de ses bornes une tension de référence de signe positif tandis que l'autre de ses bornes est reliée à la masse à travers la résistance R11.

La cathode de la diode D2 est également reliée à l'armature d'un condensateur C6 dont l'autre armature est mise à la masse. La cathode de la diode D2 est également reliée à l'armature d'un condensateur C4 dont l'autre armature aboutit à l'anode de la diode D1. En parallèle sur le condensateur C4 est montée une résistance R9. L'anode de la diode D1 est aussi reliée à une extrémité d'une résistance R10 dont l'autre extrémité est reliée à une armature d'un condensateur C5 dont l'autre armature est reliée au curseur du potentiomètre R12.

L'homme de l'art comprendra que les résistances R9 et R10 forment avec les condensateurs C3, C4 et C5 les constantes de temps Q0 à Q3 de l'équation ci-annexée. De même il comprendra que la résistance R9 contribue à la constante C1. Par ailleurs, le condensateur C6 est un condensateur de valeur beaucoup plus forte que les condensateurs C3 à C5 et ne sert qu'à supprimer toute composante alternative sur le curseur R12.

Le point commun 20 de la résistance R10 et du condensateur C5 définit la sortie intermédiaire du détecteur de seuil DTS1. Cette sortie 20 est appliquée à un réseau résistance-diode permettant de faire varier le signal de sortie 20 selon une fonction logarithmique selon l'invention.

Plus précisément, la sortie intermédiaire 20 est reliée à une extrémité d'une résistance R13 dont l'autre extrémité aboutit à la cathode d'une diode D3. L'anode de la diode D3 est reliée au curseur d'un potentiomètre R15 dont l'une des extrémités est reliée à une extrémité d'une résistance R16 recevant à son autre extrémité une tension de référence de signe positif et dont l'autre extrémité est reliée à une extrémité d'une résistance R14 mise à la masse. Le point commun 22 de la résistance R13 et de la diode D3 est relié à la base d'un transistor T2 monté selon un montage du type DARLINGTON avec un transistor T3. Les collecteurs des transistors T2 et T3 sont reliés à une tension de référence de signe positif. L'émetteur du transistor T3 est relié à une extrémité d'une résistance R17 mise à la masse. Le point commun 24 de la résistance R17 et du transistor T3 est relié à une extrémité d'une résistance R18 dont l'autre extrémité est reliée à une armature d'un condensateur C7 mis à la masse. La résistance R18 et le condensateur C7 forment un filtre passe-bas destiné à éliminer les tensions parasites de fréquence élevée. Le point commun 26 de la résistance R18 et du condensateur C7 définit la sortie du détecteur à seuil DTS1, sortie qui est appliquée à la commande en fréquence d'un oscillateur VCO.

Le second détecteur à seuil DTS2 possède une structure assez semblable à celle du détecteur à seuil DTS1. L'extrémité 14 du potentiomètre R8 est reliée par l'intermédiaire d'un condensateur C8 à l'anode d'une diode D4 et à la cathode d'une diode D5. Le montage des diodes D4 et D5 est de polarité inverse à celui des diodes D1 et D2.

L'anode de la diode D5 est reliée au curseur d'un potentiomètre R20 qui reçoit à ses bornes une tension de référence de signe positif. La cathode de la diode D4 est reliée à l'armature d'un condensateur C9 dont l'autre armature est reliée au curseur du potentiomètre R20. En parallèle avec le condensateur C9 est montée une résistance R19. La cathode de la diode D4 est reliée également à une extrémité d'une résistance R21 dont l'autre extrémité aboutit à l'armature d'un condensateur C10, dont l'autre armature est reliée au curseur du potentiomètre R20. Le point commun 30 de la résistance R21 et du condensateur C10 est relié à une extrémité d'une résistance R22 dont l'autre extrémité est reliée à l'armature d'un condensateur C11 dont l'autre armature est reliée au curseur du potentiomètre R20. Le point commun 32 de la diode D5 de la résistance R19 du condensateur C9, du condensateur C10 et du condensateur C11 est relié à l'armature d'un condensateur C12 dont l'autre armature est à la masse. Une borne du potentiomètre R20 est reliée à une extrémité d'une résistance R23 mise à la masse.

Le point commun 34 de la résistance R22 et du condensateur C11 est relié à la base d'un transistor T4 monté en amplificateur de gain du rapport R25 sur R24. La résistance R24 est reliée à une tension de référence de signe positif, elle forme la charge de l'émetteur du transistor T4. La résistance R25 est reliée à la masse, elle forme la charge du collecteur du transistor T4. Au noeud 36, la tension est donc amplifié par rapport à celle du noeud 34.

Il est à remarquer que le détecteur à seuil DTS2 reçoit un redressement en sens inverse de celui du détecteur à seuil DTS1 car il est nécessaire que le détecteur à seuil DTS2 fournisse une tension qui croît quand l'amplitude du signal Oe augmente.

Le transistor amplificateur T4 étant monté inverseur et la tension au noeud 36 diminuant quand elle devrait augmenter, il est prévu alors d'ajouter un transistor T7 dont la base est reliée au noeud 36, dont l'émetteur est relié à la masse à travers une résistance R40 d'un kiloohm et dont le collecteur est relié à une borne de la résistance R20 à travers une résistance R41 d'un kiloohm.

Le transistor T7 qui a pour rôle d'inverser à nouveau la tension est par exemple du type BC558B.

L'homme de l'art comprendra que les résistances R19 à R22 forment avec les condensateurs C9 à C11 les constantes K1 à K4 dans l'équation ci-annexée. Le condensateur C12 agit comme le condensateur C6 et supprime toute composante alternative au noeud 32.

Il est à noter qu'il est possible d'intercaler au point 34 un dispositif semblable aux éléments R13, D3, R14 à R16, si l'on peut donner une caractéristique logarithmique au détecteur de seuil DTS2.

La sortie SVCO du montage oscillateur VCO est appliquée par l'intermédiaire d'un réseau en série constitué d'une résistance variable R26, d'une résistance R27 et d'un condensateur C12 à une entrée AN1 d'un amplificateur opérationnel du type NORTON. La seconde entrée AN2 de l'amplificateur est reliée à une extrémité d'une résistance R28 dont l'autre extrémité est reliée à une armature d'un condensateur C13 mis à la masse. L'entrée AN2 ne reçoit donc aucune tension alternative. Le point commun 40 de la résistance R28 et du condensateur C13 est relié à une extrémité d'une résistance R29 mise à la masse et à une extrémité d'une résistance R30 dont l'autre extrémité est reliée à une tension de référence de signe positif.

Le point commun 40 est relié également à une extrémité d'une résistance R31 dont l'autre extrémité est reliée à l'entrée AN1. L'amplificateur NORTON est équipé de deux diodes D6 et D7 de linéarisation comme cela est habituel dans ce type d'amplificateur.

Une résistance R33 est disposée entre le point 36 et le point DTS2.

Le gain de l'amplificateur NORTON est proportionnel au courant qui entre audit point SDTS2.

La sortie SBP de l'amplificateur NORTON est reliée à un émettodyne T5 qui fait partie de l'amplificateur NORTON. La charge de l'émettodyne est la résistance R34. Le point commun 50 de la base du transistor T5 et de la sortie SBP de l'amplificateur NORTON est relié à une extrémité d'une résistance R35 dont l'autre extrémité est mise à la masse ainsi qu'à une extrémité d'une résistance R36 dont l'autre extrémité est reliée à une tension de référence de signe positif.

L'émetteur du transistor T5 constitue la sortie S1 du modulateur ainsi constitué c'est-à-dire la borne de sortie du convertisseur paramétrique.

Le condensateur C14 ne laisse passer que la composante alternative du signal paramétrique.

Par ailleurs, une des extrémités de la résistance R26 est reliée à une armature d'un condensateur C15 dont l'autre armature est reliée à la base d'un transistor T6 dont l'émetteur constitue la seconde sortie S2 du convertisseur paramétrique. Le point commun 60 de la sortie S2 du convertisseur et de l'émetteur du transistor T6 est relié à une extrémité d'une résistance R37 reliée à la masse.

La base du transistor T6 est reliée à la cathode d'une diode D8 dont l'anode est à la masse. En parallèle à la diode D8 est montée une résistance R38.

L'homme de l'art comprendra que le premier détecteur DTS1 effectue une détection ou redressement en doubleur de tension de la tension qui se trouve définie par le potentiomètre R8. Compte tenu du sens de branchement des diodes D1 et D2, la détection se fait par valeur inférieure au seuil fixé par le curseur 12, c'est-à-dire que la tension de sortie du premier détecteur est retranchée du seuil défini par le curseur 12. Le condensateur C6 de forte valeur empêche l'apparition de tension alternative aux bornes de ce potentiomètre. Par ailleurs, les éléments du détecteur à seuil DTS1 définissent, pour ce premier détecteur à seuil, une constante de temps de l'ordre de 0,05 s.

Au contraire, dans le second détecteur à seuil DTS2, le sens de détection est inverse : lorsque sa tension d'entrée est inférieure au seuil, le détecteur DTS2 fournit une tension de sortie de même sens que le seuil défini par le potentiomètre R8. On trouve donc aux bornes du condensateur C8 une tension qui est la somme de la tension de seuil et de la somme redressée (ou représentative de celle-ci, compte tenu de certains décalages produits par les diodes, et qui existent aussi dans le premier détecteur). Les éléments R19, R21, R22, C9, C10, C11 sont choisis pour que le second détecteur DTS2 possède une constante de temps de l'ordre de 0,3 s.

L'appareil offre diverses possibilités de réglage, sur lesquelles on reviendra plus loin. Dans son utilisation normale, le seuil du premier détecteur DTS1 (et si nécessaire le VCO) sont réglés de sorte que la fréquence de l'oscillateur VCO au repos soit voisine de la limite supérieure du domaine audible, que l'on peut considérer soit comme fixée à l'avance à 17000 Hz par exemple, soit comme déterminée d'après la réponse du sujet, analysée en particulier par audiogramme. De son côté, le seuil du second détecteur DTS2 est réglé de sorte que l'amplitude du signal de sortie du modulateur soit faible ou nulle lorsque l'oscillateur est à sa fréquence de repos, c'est-à-dire que la tension redressée par le détecteur de seuil DTS2 est nulle. On obtient ainsi aux sorties S1 et S2 un signal paramétrique dont la fréquence et/ou l'amplitude varient en fonction de la fréquence et/ou de l'amplitude du signal d'entrée.

Grâce au réseau diode D3-résistance R13, R14, R15 et R16, on obtient en outre aux sorties S1 et S2 un signal dont la fréquence et/ou l'amplitude varient en fonction du logarithme de la fréquence et/ou de l'amplitude du signal d'entrée. Il en résulte que le signal paramétrique qui sera injecté dans les oreilles du sujet à traiter sera plus agréable à entendre dans la mesure où la sensibilité de l'oreille est également une fonction logarithmique du signal sonore appliqué à ladite oreille.

Dans un exemple particulier de réalisation, les diodes D1, D2, D3, D4, D5, D6, D7, D8 sont du type 1N 4448.

Le potentiomètre R18 est de 47 kilo-ohms, les condensateurs C1 à C11 sont respectivement de 100 nanofarads, 470 microfarads, 470 nanofarads, 0,47 microfarads, 100 nanofarads, 1000 microfarads, 100 nanofarads, 10 nanofarads, 100 nanofarads et 100 nanofarads.

Dans l'amplificateur d'entrée AP, les résistances R1 à R7 sont respectivement de 4,7 kilo-ohoms, 10 kilo-ohms, 1 méga-ohm, 4,7 kilo-ohms, 68 ohms, et 470 ohms. Le transistor T1 est du type BC 548 B. Dans le premier détecteur de seuil DTS1, les résistances R9 à R18 sont respectivement de 220 kilo-ohms, 68 kilo-ohms, 10 kilo-ohms, 10 kilo-ohms, 22 kilo-ohms, 1,5 kilo-ohms, 2,2 kilo-ohms, 3,3 kilo-ohms, 1 kilo-ohm et 2,2 kilo-ohms. Dans le second détecteur à seuil DTS2, les condensateurs C8 à C12 sont respectivement de 100 nanofarads, 10 nanofarads, 100 nanofarads, 100 nanofarads et 220 microfarads. Les résistances R19 à R25 sont respectivement de 68 kilo-ohms, 10 kilo-ohms, 100 kilo-ohms, 220 kilo-ohms, 10 kilo-ohms, 1 kilo-ohm et 10 kilo-ohms. Les transistors T2 et T3 montés en DARLINGTON sont du type BC 548 B.

Le transistor T4 est du type BC 558 B.

L'oscillateur VCO peut être un circuit intégré du type HEF 4046 B fabriqué par la Société PHILIPS. Sa borne No 9 reçoit la sortie du premier détecteur à seuil DTS1. Sa borne No 16 reçoit la tension d'alimentation. Sa borne No 8 est à la masse. La tension de commande est appliquée à l'entrée 5. Elle doit être positive pour que le VCO fonctionne.

La résistance R39 reliée à la borne 11 et le condensateur C16 relié aux bornes 6 et 7 déterminent la fréquence de l'oscillateur VCO.

Dans le cas où on souhaite obtenir un signal paramétrique agréable à entendre par le sujet à traiter, il est préférable que l'oscillateur délivre un signal rectangulaire de facteur de forme 0,5.

Dans l'étage oscillateur, les résistances R38 et R39 sont de 22 kilo-ohms et 6,8 kilo-ohms. Le condensateur C16 est de 4,7 nanofarads.

Du côté de l'étage modulateur, l'amplificateur NORTON est du type LM 13 600. Les résistances R26 à R38 sont respectivement de 470 kilo-ohms, 33 kilo-ohms, 470 ohms, 2,2 kilo- ohms, 2,2 kilo-ohms, 470 ohms, 8,2 kilo-ohms, 4,7 kilo-ohms, 4,7 kilo-ohms, 3,9 kilo-ohms, 10 kilo-ohms, 3,3 kilo-ohms et 18,2 kilo-ohms. Les condensateurs C12 à C15 sont respectivement de 100 nanofarads, 47 microfarads, 470 nanofarads et 2 nanofarads.

Comme représenté sur la figure 2, l'étage amplificateur AP reçoit un signal naturel Oe qui peut provenir d'une cassette ou d'un microphone (entrée EK) et/ou d'un aure microphone (entrée EC).

Par manoeuvre du potentiomètre R8, l'utilisateur règle à sa convenance le voltage du signal d'entrée Oe amplifié à l'entrée du détecteur à seuil DTS1. Cela suppose que les résistances R1 et R2 sont dimensionnées de manière que les signaux appliqués aux entrées EC et ER produisent au point 2 des tensions sensiblement de même amplitude.

Comme les microphones peuvent être attaqués par des sujets parlant différemment, il est nécessaire de régler l'amplificateur de chaque microphone d'un réglage d'amplification A.

Il est ensuite nécessaire de régler le potentiomètre R8, puis d'ajuster l'entrée EC, le réglage d'amplification A et enfin l'entrée EK.

Il en résulte que tout autre réglage du potentiomètre R8 a l'inconvénient de requérir une correction sur le réglage d'amplification A.

Le Demandeur s'est posé le problème de remédier à cet inconvénient.

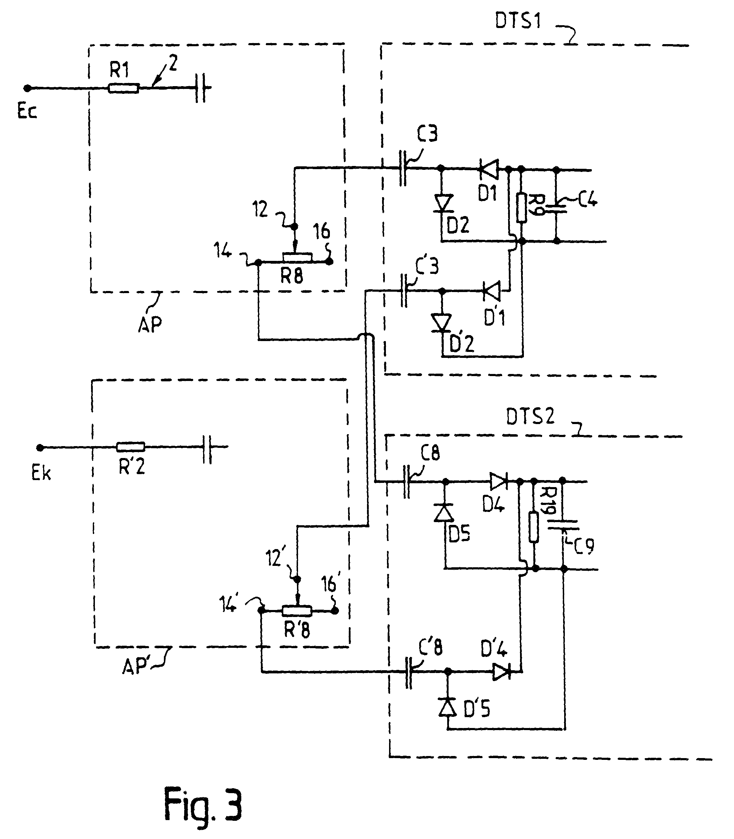

Conformément à la figure 3, la solution à ce problème consiste d'une façon générale à ajouter un étage amplificateur auxiliaire AP' semblable à l'étage amplificateur AP et connecté à l'entrée EK.

L'ajout de l'étage amplificateur auxiliaire AP' apporte les modifications suivantes par rapport au dispositif décrit en référence à la figure 2.

La résistance R2 est supprimée. Le potentiomètre R8 n'agit plus que sur le signal appliqué à l'entrée EC. L'étage amplificateur auxiliaire AP' ne comporte pas de résistance R1. Le potentiomètre R8' n'agit que sur le signal appliqué à l'entrée EK.

Comme décrit en référence à la figure 2, les diodes D1 et D2 chargent la capacité C4 sur le signal appliqué à l'entrée EC dont une fraction est amplifiée et prélevée par le potentiomètre R8.

Des diodes auxiliaires DI' et D2' montées d'une façon semblable à celle des diodes D1 et D2 chargent la capacité C4 sur le signal appliqué à l'entrée EK dont une fraction est amplifiée et prélevée par le potentiomètre auxiliaire R8' semblable au potentiomètre R8.

Une paire de diodes auxiliaires D4' et D5' montées d'une façon semblable à celle des diodes D4 et D5 charge la capacité C9 indépendamment de la paire de diodes D4 et D5.

Il est à remarquer que les réglages des potentiomètres R8 et R8' sont bien indépendants.

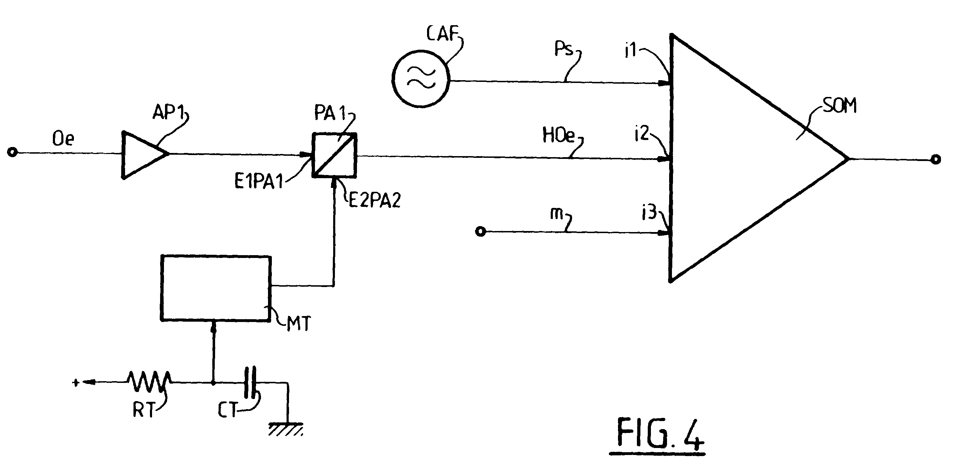

Il est fait maintenant référence à la figure 4.

Dans plusieurs phases de la rééducation, le Demandeur a cherché à hacher la compréhension du signal sonore de manière à fixer l'attention consciente et inconsciente du sujet sur le son paramétrique. Dans ce but, il est prévu d'entrecouper le signal audiofréquence avec une récurrence réglable de silences d'une durée prédéterminée.

Sur la figure 4, il est représenté le schéma électrique permettant de hacher le signal sonore selon une cadence prédéterminée de silences d'une durée prédéterminée.

Un sommateur SOM reçoit à son entrée il un signal paramétrique PS engendré par le convertisseur paramétrique CAF décrit en référence à la figure 2. A son entrée i2, le sommateur reçoit un signal naturel HOE entrecoupé à une cadence prédéterminée de silences d'une durée prédéterminée. Plus précisément, le signal naturel Oe est tout d'abord amplifié par un amplificateur AP1 puis appliqué à une entrée E2PA1 d'une porte analogique PA1 du type par exemple HEF 4066 N. L'autre entrée E2PA2 qui est la commande d'ouverture de la porte analogique PA1, reçoit un signal issu d'un multivibrateur MT par exemple NE 555 capable de délivrer des impulsions d'une longueur prédéterminée. La constante de temps du multivibrateur MT est déterminée par un réseau résistance-condensateur RT-CT ajustable. Par exemple, la constante de temps est de l'ordre de 0,5 s avec une résistance RT d'une valeur de 68 kilo-ohms et d'un condensateur CT d'une valeur de 47 microfarads. La sortie de la porte PA1 véhicule un signal HOe qui est le signal Oe amplifié lorsque le signal d'entrée E2PA2 est positif et qui est nul quand le signal d'entrée E2PA2 est nul. A l'entrée i3 du sommateur SOM est appliqué un signal m représentatif de la modulation due au microphone de l'installation.

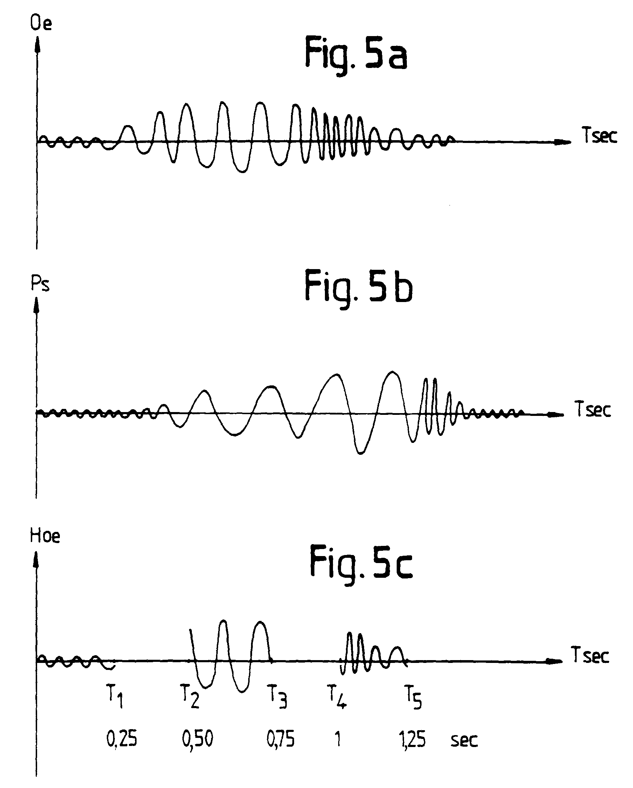

Sur la figure 5A, on a représenté un chronogramme d'un signal Oe (Pour la clarté du dessin, le nombre de sinusoïdes du tracé est rendu beaucoup plus faible qu'en réalité). Sur la figure 5B, on a représenté un chronogramme illustrant le signal paramétrique PS correspondant. Il s'agit d'un signal sensiblement sinusoïdal. On observe les variations de fréquence décrites ci-dessus ainsi que les variations plus lentes de l'amplitude.

Sur la figure 5C, on a représenté un chronogramme du signal naturel HOe, haché à cadence prédéterminée de silences d'une longueur prédéterminée. Le signal naturel OE est ainsi entrecoupé de silences à une cadence de l'ordre de 1/4 Hz, c'est-à-dire avec une constante de temps de l'ordre de 0,5 s pour l'intervalle de temps défini entre les temps 0 et T2.

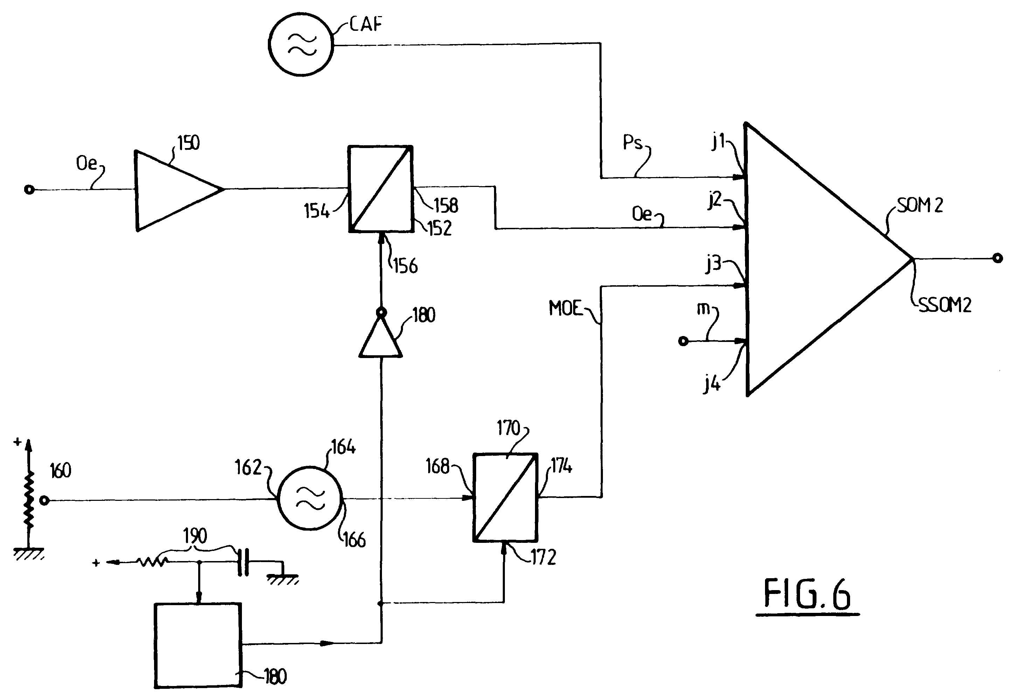

Il est maintenant fait référence à la figure 6 qui est un schéma électrique d'un mode de réalisation d'une installation dans laquelle le signal naturel est masqué au lieu d'être haché comme décrit en référence aux figures 4 et 5.

Un sommateur SOM2 reçoit à son entrée j1 le signal paramétrique PS engendré par le convertisseur paramétrique CAF décrit en référence à la figure 2.

Le signal naturel OE amplifié par un amplificateur 150 est appliqué à l'entrée 154 d'une porte analogique 152 par exemple du type HEF 4066. La sortie 158 (HOE) de la porte analogique 152 est appliquée à l'entrée j2 du sommateur SOM2.

Une tension ajustable due à un potentiomètre 160 est appliquée à l'entrée 162 d'un oscillateur VCO 164 commandé en tension. Par exemple l'oscillateur 164 est du type HEF 4046. La sortie 166 de l'oscillateur 164 est appliquée à l'entrée 168 d'une porte analogique 170. Par exemple la porte analogique 170 est du type HEF 4066. Il est à remarquer un multivibrateur 180 commande les portes analogiques 152 et 170, l'une 152 en direct, et l'autre 170 après un inverseur 180 de telle sorte que lorsque l'une est fermée, l'autre est ouverte.

Ainsi, à la sortie 174 de la porte analogique 170, il est délivré un signal naturel MOe dû à l'oscillateur 164, mais qui n'a lieu que lorsque l'entrée j2 ne reçoit rien. Le signal MOe est ensuite appliqué à l'entrée j3 du sommateur SOM2. La constante de temps du multivibrateur 180 est déterminée par un réseau 190 de type RC ajustable.

Une entrée j4 reçoit un signal m représentatif de la modulation des microphones.

On obtient ainsi à la sortie SSOM2 du sommateur SOM2 le signal paramétrique PS, et soit le signal naturel Oe, soit le signal naturel modulé MOe. Le signal de modulation relatif au microphone m, peut faire aussi partie du signal SSOM2.

L'homme de l'art comprendra qu'un tel sommateur SOM2 peut être appliqué à chaque oreille du sujet à traiter.

Une installation selon l'invention permet la mise en oeuvre d'un procédé de traitement suivant lequel on injecte dans chaque oreille du sujet un mélange de sons compréhensibles hachés ou masqués comme décrit en référence aux figures 3 à 5 et de sons paramétriques fournis par l'installation, le rapport de l'amplitude des sons compréhensibles et des sons paramétriques introduits dans une oreille pouvant être différent du rapport des sons compréhensibles et des sons paramétriques introduits dans l'autre oreille. Chacun des rapports est réglable, indépendamment l'un de l'autre.

Par ces réglages, on peut aboutir, pour chaque oreille, à la suppression des sons compréhensifs ou des sons paramétriques.

L'utilisation pratique de l'installation décrite en référence aux figures 1 à 5 peut s'effectuer comme suit, dans le cas, pris à titre d'exemple, d'une dyslexie infantile. La rééducation s'effectue en cinq phases, s'étageant sur un à quatre mois, à raison d'au moins deux séances d'une heure par semaine. L'évolution du réglage du convertisseur paramétrique, c'est-à-dire du son paramétrique, est indiquée ci-après.

Dans une première phase de rééducation, le sujet entend initialement un signal constitué de voix et/ou de musique "paramétrique", sans leur équivalent en son naturel.

Dans la seconde phase, le sujet est soumis à un mode dit "alternance". Pour un même son naturel de base (segment de message), il entend alternativement, d'abord ce son, converti en paramétrique, (éventuellement mélangé à un degré variable au son naturel), ensuite le son naturel seul. Dans cette phase d'alternance, le découpage des messages (phrases très courtes) s'effectue dans un premier temps par phonèmes, dans un second temps par syllabes, dans un troisième temps enfin par éléments syntaxiques.

La troisième phase de rééducation est active, car le sujet va tenter de répéter ce qu'il entend. On part d'une cassette de mots pré-enregistrés en clair, avec des intervalles permettant au sujet de répéter chaque mot (ou paire de mots). Les mots pré-enregistrés sont appliqués au convertisseur audiofréquence décrit en référence à la figure 2. De la même façon, le texte répété par le sujet est également appliqué au convertisseur audiofréquence. Dans le casque, le sujet reçoit le signal paramétrique et le signal naturel. Il est intéressant de travailler en stéréophonie, avec en principe dans l'oreille Gauche le signal paramétrique et dans l'oreille Droite le signal naturel, ce qui correspond mieux à la latéralisation fonctionnelle des hémisphères cérébraux, inverse de celle des oreilles, remarque étant faite que l'hémisphère droit contient les centres du langage.

Dans un premier temps, la répétition s'effectue mot par mot, dans un second temps par double mot (paire de mots).

Dans un troisième temps, on va traiter non seulement les mots et doubles mots, mais aussi des textes avec césure syntaxique, par exemple:

"Il était une fois" ( silence suffisant pour répétition) "Le petit chaperon rouge" ( silence pour répétition) Ceci peut se faire par mélange de sons paramétriques et naturels en monophonie, les mots étant supposés acquis en son naturel.

La quatrième étape de rééducation passe à un mode semi-guidé où le sujet répète ce qu'il entend d'une part et lit ce qu'il répète d'autre part. Ici, la répétition et la lecture s'effectuent à l'aide d'une bande pré-enregistrée, appliquée au convertisseur de l'invention, et d'un livre sur lequel est écrit un texte doté de césures prédéterminées en correspondance des silences entrecoupant le signal audiofréquence.

La cinquième étape est un mélange de lecture guidée comme ci-dessus, et de lecture libre avec prononciation du texte lu, et audition du texte lu, sous forme d'un mélange de signal paramétrique et de signal naturel. C'est à ce stade que, progressivement, on supprime complètment le signal paramétrique.

Dans certains cas (très jeunes enfants, dont l'attention est moindre), on peut leur lire toute une histoire, en mélange de sons paramétriques et naturels. Ceci vaut notamment pour les étapes 1, 2 et 3.

Bient entendu, il est à tout moment possible d'enregistrer ce que dit le sujet.

On revient maintenant à la description technique de l'invention.

Dans ce qui précède, il est supposé que le montage oscillateur génère une fréquence pure contenant éventuellement une proportion assez importante d'harmoniques.

Le Demandeur a constaté qu'en filtrant les harmoniques pairs, le sujet entendait des sons plus agréables. Dans ces conditions, le filtrage peut être obtenu soit par un simple condensateur appliqué à la sortie du convertisseur pour jouer le rôle de filtre passe-bas comme mentionné ci-avant. Dans un autre mode de réalisation, le filtrage des harmoniques pairs est obtenu par la génération d'un signal rectangulaire présentant un rapport de forme de 0,5. Ce signal rectangulaire ou en créneau est produit par l'oscillateur VCO. En variante, ou en complément, on peut aussi émettre plusieurs signaux simultanés, qui peuvent notamment former entre eux un accord musical, ou couvrir une bande étroite de fréquence.

Il est rappelé que le Demandeur a constaté qu'en faisant varier de façon logarithmique la fréquence et/ou l'amplitude du signal paramétrique par la fréquence et/ou l'amplitude du signal naturel, les sujets ressentent une sensation plus agréable et de ce fait une rééducation utilisant de tels signaux paramétriques obtient de meilleurs résultats. Le Demandeur a également constaté qu'en faisant varier les constantes de temps des détecteurs de seuil DTS1 et DTS2, il obtient de meilleurs résultats concernant la rééducation des sujets. Avantageusement, lesdites constantes de temps sont alors une fonction croissante de la fréquence du signal naturel appliqué auxdits sujets.

Avantageusement, les textes qui sont diffusés aux oreilles des sujets sont enregistrés sur des cassettes présentant une protection contre le piratage.

Selon un mode de réalisation préféré, le texte est ainsi enregistré selon un système à pistes alternées, c'est-à-dire qu'une première partie du texte est stockée sur une première piste, tandis qu'une seconde partie du texte est enregistrée sur une seconde piste de la cassette. Chaque piste étant munie d'un signal de synchronisation qui permet aux moyens de lecture de savoir comment reconstituer le texte ainsi stocké sur deux pistes (la simple lecture de la somme des deux pistes pourrait être "empoisonnée" signaux parasites subsistant dans des parties de pistes non utilisées).

Comme décrit en référence aux figures 3 à 5, l'installation peut comporter un mélangeur-sommateur qui achemine vers le casque du sujet, une proportion ajustable des sons suivants :

a) le son original de la cassette,
b) le son paramétrique correspondant,
c) le son dû au microphone du sujet,
d) le son paramétrique correspondant,
e) le son du microphone du médecin, et
f) le son paramétrique correspondant.

Il est à remarquer qu'on peut utiliser deux mélangeurs-sommateurs différents et indépendants, un pour chaque oreille du sujet.

Dans ce qui précède, le signal paramétrique Ps a été ajusté de manère qu'en absence de signal naturel Oe, Ps soit dans le domaine des ultrasons (donc inaudible) et que Oe fasse baisser la fréquence de Ps de manière à le faire pénétrer dans le domaine audible.

Il est important qu'en absence de Oe, le sujet n'entende pas de signal paramétrique Ps.

Une autre méthode pour parvenir à ce résultat est d'ajuster Ps dans le domaine audible, vers une note aigue, en absence de Oe; et de veiller à ce que l'amplitude de Ps ne soit pas nulle tant que Oe est nul;

Pour que l'amplitude de Ps soit nulle, il suffit d'annuler, par exemple, la tension de repos au point 36 de la figure 2;

Dans certains cas limités, la paramétrie sans ultrasons s'est révélée plus efficace que la paramétrie décrite en premier lieu; de sorte qu'il est avantageux d'utiliser un équipement que l'utilisateur peut commuter sur l'un ou l'autre mode de la paramétrie.

Bien entendu, la description ci-dessus n'est pas limitative, et les fonctions décrites peuvent être réalisées par tout moyen technique approprié.

Par exemple, le support de reproduction de son peut-être non seulement un lecteur de cassette analogique, mais aussi un lecteur de cassette numérique, ou encore un lecteur laser de disque compact.

Par ailleurs, l'appareil permet un apprentissage de la boucle audio-phonatoire d'un sujet, à partir d'un état où cette boucle n'est pas initiée, ou bien est mal initiée. Cela sert naturellement pour la première acquisition du langage; cela peut également servir pour l'acquisition de langues étrangères.

L'invention peut également être mise en oeuvre sur la base d'un micro-ordinateur. Comme périphérique de sortie, le micro-ordinateur est muni d'un moniteur, il lui est adjoint un lecteur de source acoustique, par exemple un lecteur de compact disque du type CD ROM. Il lui est également adjoint un haut-parleur de bonne qualité, de préférence assorti d'une carte interne pour améliorer la reproduction audiofréquence, ainsi que d'un microphone.

Enfin, le micro-ordinateur reçoit un périphérique d'entrée, qui peut être un clavier, ou de préférence une table à digitaliser permettant la reconnaissance par le micro-ordinateur de l'écriture manuelle.

Il existe différents types de tables à digitaliser capables de travailler, en combinaison avec un logiciel de reconnaissance de caractères graphiques manuels. Ces derniers logiciels permettent maintenant des performances satisfaisantes (remarque étant formulée qu'une réponse absolument parfaite n'est pas requise dans une phase d'apprentissage).

Dans une version simplifiée, il est envisageable que la table à digitaliser soit munie de cases prédéfinies, à l'intérieur desquelles le sujet soit contraint à écrire en lettres majuscules.

Une autre variante consiste à utiliser un crayon optique coopérant directement avec l'écran du moniteur pour permettre l'écriture sur celui-ci.

Les fonctions précitées de l'appareil selon l'invention peuvent être soit réalisées séparément, soit de préférence logées également à l'intérieur d'une carte située dans le micro-ordinateur.

Ce dernier mode de réalisation présente l'avantage de pouvoir rééduquer non seulement la boucle audio-phonatoire, mais aussi la boucle "visio-grapho-motrice", et ceci, en concordance du travail audiophonatoire.

En d'autres termes, on va réaliser non seulement un meilleur apprentissage de l'audition et de la parole, mais aussi de la lecture et de l'écriture.

Par exemple, en même temps que le sujet est entraîné à reconnaître le son "TABLE", éventuellement à prononcer le mot "TABLE", ce même mot s'affiche en caractères majuscules sur l'écran du moniteur, et le patient doit l'écrire sur la table à digitaliser, ou bien sur une autre zone de l'écran, à l'aide du crayon optique.

Ceci ouvre de nouveaux horizons au procédé proposé selon la présente invention.

Annexe

$$As = K2 \, (1\text{-}K1 \, Fe) \, (1\text{+}K4 \, Ae)$$

$$Fs = (1\text{-}Q1 \, Fe) \, Q2\text{+}Q0\text{+}Q3 \, Ae$$

## Revendications

1. Dispositif convertisseur audiofréquence, en particulier pour l'apprentissage audiophonatoire de sujets, propre à élaborer, à partir d'un signal audiofréquence (Oe) arrivant à l'entrée, un signal paramétrique (Ps) destiné à être appliqué, par l'intermédiaire d'un transducteur électro-acoustique, à une personne à traiter, ledit appareil comportant :

   - des moyens formant amplificateur d'entrée (AP, AP') ;

   - des premiers moyens (DTS1) formant détecteur de seuil, reliés à la sortie (12) des moyens formant amplificateur d'entrée (AP) et retranchant d'un seuil la tension fournie par celui-ci, après redressement ;

   - des seconds moyens (DTS2) formant détecteur à seuil également reliés à la sortie (14) des moyens formant amplificateur d'entrée (AP, AP'), ajoutant à un seuil la tension fournie par celui-ci, après redressement, et possédant une constante de temps au moins égale à celle des premiers moyens formant détecteur ;

   - des moyens (VCO) formant oscillateur commandé en tension, reliés à la sortie des premiers moyens formant détecteur à seuil : et

   - des moyens formant modulateur dont les deux entrées sont respectivement reliées aux sorties des seconds moyens formant détecteur à seuil et des moyens formant oscillateur, et dont la sortie fournit ledit signal paramétrique, caractérisé en ce que :

   - l'amplitude et/ou la fréquence du signal paramétrique varie en fonction du logarithme de l'amplitude et/ou de la fréquence du signal audiofréquence.

2. Dispositif selon la revendication 1, caractérisé en ce que l'un au moins des premiers et seconds moyens formant détecteurs de seuil comprend au moins un réseau à diode et à résistance pour faire varier l'amplitude et/ou la fréquence du signal paramétrique en fonction du logarithme de l'amplitude et/ou de la fréquence du signal audiofréquence.

3. Dispositif selon l'une quelconques des précédentes revendications, caractérisé en ce que la ou les constantes de temps des premiers et/ou seconds détecteurs de seuil est une fonction croissante de la fréquence du signal audiofréquence.

4. Dispositif selon l'une quelconque des précédentes revendications, caractérisé en ce que le signal paramétrique est un signal complexe comprenant une fréquence fondamentale et une pluralité de fréquences harmoniques et en ce que les moyens formant modulateur sont équipés de moyens de filtrage propres à filtrer des harmoniques desdites fréquences.

5. Dispositif selon la revendication 4, caractérisé en ce que les moyens de filtrage comprennent un filtre de type passe-bas relié à la sortie des moyens formant modulateur.

6. Dispositif selon l'une des précédentes revendications, caractérisé en ce que les moyens formant oscillateur engendrent un signal en créneau dont le facteur de forme est de l'ordre de 0,5.

7. Dispositif selon l'une quelconque des précédentes revendications, caractérisé en ce que le signal audiofréquence est entrecoupé à une cadence choisie de silences d'une durée prédéterminée.

8. Dispositif selon la revendication 7, caractérisé en ce que la cadence de hachage du signal audiofréquence est réglable entre 0,3 et 10 Hz.

9. Dispositif selon l'une quelconque des précédentes revendications, caractérisé en ce qu'il est prévu d'ajuster les constantes de temps des premiers et seconds moyens formant détecteur à seuil de telle sorte que la plus grande reste inférieure à une valeur prédéterminée, laquelle valeur étant représentative d'une séquenciation rythmique tenant compte des phonèmes constituant le signal audiofréquence.

10. Dispositif selon l'une quelconque des précédentes revendications, caractérisé en ce que les moyens formant amplificateur d'entrée (AP, AP') comprennent deux étages amplificateurs propres chacun à amplifier séparément et indépendamment l'un de l'autre un signal audiofréquence respectif Oe.

11. Dispositif selon l'une quelconque des précédentes revendications, caractérisé en ce que l'amplitude du signal paramétrique Ps est nulle pendant les silences du signal naturel Oe.

12. Installation pour l'apprentissage audio-phonatoire de sujets, caractérisée en ce qu'elle comprend un dispositif convertisseur selon l'une des revendications 1 à 11.

13. Installation selon la revendication 12, caractérisée en ce qu'elle comporte, à l'entrée du convertisseur, un commutateur d'entrée susceptible d'être relié à un lecteur de sons et/ou à un ou plusieurs microphones, et à la sortie du convertisseur, un commutateur de sortie susceptible d'être relié à une chaîne de reproduction sonore et/ou à un enregistreur de sons.

14. Installation selon la revendication 12 ou la revendication 13, caractérisée en ce qu'elle comporte des réglages de niveaux séparés pour les deux oreilles, de manière que l'on puisse injecter dans chaque oreille un mélange différent de sons paramétriques et de sons ordinaires (compréhensibles).

15. Installation selon l'une quelconque des précédentes revendications 12 à 14, caractérisé en ce qu'elle comprend des moyens formant mélangeur-sommateur comprenant :

- une première entrée recevant le signal audiofréquence préalablement stocké sur un support de sons ;

- une seconde entrée recevant le transformé paramétrique du signal audiofréquence ainsi stocké ;

- une troisième entrée recevant le signal audiofréquence issu d'un microphone destiné au sujet à traiter ;

- une quatrième entrée recevant le transformé paramétrique du signal issu du microphone destiné au sujet à traiter ;

- une cinquième entrée recevant le signal audiofréquence issu d'un microphone destiné à l'utilisateur de l'installation ; et

- une sixième entrée recevant le transformé paramétrique du signal audiofréquence issu du microphone de l'utilisateur.

16. Installation selon la revendication 15, caractérisée en ce qu'elle comprend deux mélangeurs-sommateurs indépendants, un pour chaque oreille du sujet à traiter.

17. Procédé pour l'apprentissage audiophonatoires de sujets, mettant en oeuvre une installation selon l'une des revendications 12 à 16, caractérisé en ce qu'il comprend les étapes suivantes :

a) injecter dans chaque oreille du sujet à traiter un mélange de sons compréhensibles et de sons paramétriques fournis par l'installation ; les sons compréhensibles étant hachés à une cadence choisie de silences d'une durée prédéterminée ;

b) enregistrer les signaux sonores émis par le sujet à traiter en réponse à cette injection ;

c) appliquer le signal audiofréquence ainsi enregistré à l'installation pour le convertir en signal paramétrique ;

d) injecter à nouveau dans chaque oreille du sujet à traiter un mélange formé de sons compréhensibles et du signal paramétrique ainsi converti.

**Patentansprüche**

1. Wandlervorrichtung für Audiosignale, insbesondere für die audiophone Schulung von Personen, die geeignet ist, um ausgehend von einem Audiosignal (Oe), das am Eingang anliegt, ein parametrisches Signal (Ps) zu erzeugen, das mittels eines elektroakustischen Wandlers einer zu behandelnden Person zugeführt werden soll, wobei die Vorrichtung umfaßt:

- Mittel, die einen Eingangsverstärker (AP, AP') bilden;

- eine erste Schwellwertdetektoreinrichtung (DTS1), die mit dem Ausgang (12) der den Eingangsverstärker (AP) bildenden Mittel verbunden ist und die von letzterem gelieferte Spannung nach Gleichrichtung von einem Schwellwert abzieht;

- eine zweite Schwellwertdetektoreinrichtung (DTS2), die ebenfalls mit dem Ausgang (14) der den Eingangsverstärker (AP, AP') bildenden Mittel verbunden ist und die von letzteren gelieferte Spannung nach Gleichrichtung zu einem Schwellwert addiert und die eine Zeitkonstante hat, die jener der ersten Detektoreinrichtung mindestens gleich ist;

- eine spannungsgesteuerte Oszillatoreinrichtung (VCO), die mit dem Ausgang der ersten Schwellwertdetektoreinrichtung verbunden ist und

- eine Modulationseinrichtung, deren beide Eingänge mit den Ausgängen der ersten und der zweiten Schwellwertdetektoreinrichtung bzw. der Oszillatoreinrichtung verbunden sind und deren Ausgang das parametrische Signal liefert, dadurch **gekennzeichnet,** daß:

- die Amplitude und/oder die Frequenz des parametrischen Signals als Funktion des Logarithmus der Amplitude und/oder der Frequenz des Audiosignals variiert.

**2.** Vorrichtung nach Anspruch 1, dadurch **gekennzeichnet,** daß mindestens eine der ersten und zweiten Schwellwertdetektoreinrichtungen mindestens ein Dioden- und Widerstandsnetz hat, um die Amplitude und/oder Frequenz des parametrischen Signals als Funktion des Logarithmus der Amplitude und/oder der Frequenz des Audiosignals variieren zu lassen.

**3.** Vorrichtung nach einem der vorangegangen Ansprüche, dadurch **gekennzeichnet,** daß die Zeitkonstante(n) des ersten und/oder zweiten Schwellwertdetektors eine ansteigende Funktion der Frequenz des Audiosignales ist (sind).

**4.** Vorrichtung nach einem der vorangegangenen Ansprüche, dadurch **gekennzeichnet,** daß das parametrische Signal ein komplexes Signal ist, umfassend eine Grundfrequenz und eine Mehrzahl von harmonischen Frequenzen und daß die Modulatoreinrichtung mit Filtermitteln zum Filtern der harmonischen Frequenzen ausgerüstet ist.

**5.** Vorrichtung nach Anspruch 4, dadurch **gekennzeichnet,** daß die Filtermittel einen Tiefpassfilter umfassen, der mit dem Ausgang der Modulatoreinrichtung verbunden ist.

**6.** Vorrichtung nach einem der vorangegangenen Ansprüche, dadurch **gekennzeichnet,** daß die Oszillatoreinrichtung ein Rechtecksignal liefert, dessen Formfaktor in der Größenordnung von 0,5 liegt.

**7.** Vorrichtung nach einem der vorangegangenen Ansprüche, dadurch **gekennzeichnet,** daß das Audiosignal in einem gewählten Takt von Pausen vorgegebener Länge unterbrochen ist.

**8.** Vorrichtung nach Anspruch 7, dadurch **gekennzeichnet,** daß der Unterbrechungstakt des Audiosignals zwischen 0,3 und 10 Hz einstellbar ist.

**9.** Vorrichtung nach einem der vorangegangenen Ansprüche, dadurch **gekennzeichnet,** daß vorgesehen ist, die Zeitkonstanten der ersten und der zweiten Schwellwertdetektoreinrichtung so einzustellen, daß die größere unter einem vorgegebenen Wert bleibt, der für eine rhythmische Folge repräsentativ ist welche die das Audiosignal bildenden Phoneme berücksichtigt.

**10.** Vorrichtung nach einem der vorangegangenen Ansprüche, dadurch **gekennzeichnet,** daß die den Eingangsverstärker (AP, AP') bildenden Mittel zwei Verstärkerstufen umfassen, die jeweils getrennt und unabhängig voneinander ein entsprechendes Audiosignal (Oe) verstärken können.

**11.** Vorrichtung nach einem der vorangegangenen Ansprüche, dadurch **gekennzeichnet,** daß die Amplitude des parametrischen Signals (Ps) während der Pausen des natürlichen Signals (Oe) null ist.

**12.** Anlage zur audiophonen Schulung von Personen, dadurch **gekennzeichnet,** daß sie eine Wandlervorrichtung gemäß einem der Ansprüche 1 bis 11 umfaßt.

**13.** Anlage nach Anspruch 12, dadurch **gekennzeichnet,** daß sie am Eingang des Wandlers einen Eingangskommutator hat, der mit einer Tonleseeinrichtung und/oder mit einem oder mehreren Mikrophonen verbindbar ist, und am Ausgang des Wandlers einen Ausgangskommutator hat, der mit einer Kette zur Tonwiedergabe und/oder einer Tonaufzeichnungseinrichtung verbindbar ist.

**14.** Anlage nach Anspruch 12 oder 13, dadurch **gekennzeichnet,** daß sie für beide Ohren getrennte Pegelregelungen hat, so daß man jedem Ohr eine andere Mischung von parametrischen Tönen und gewöhnlichen (verständlichen) Tönen zuführen kann.

**15.** Anlage nach einem der Ansprüche 12 bis 14, dadurch **gekennzeichnet,** daß sie eine Misch-Addiereinrichtung hat umfassend:

einen ersten Eingang zum Empfang des Audiosignals, das vorher auf einem Tonträger gespeichert wurde;

einen zweiten Eingang zum Empfang der parametrischen Transformierten des so gespeicherten Audiosignals;

einen dritten Eingang zum Empfang des von einem Mikrophon, das der zu behandelnden Person zugeordnet ist, abgegebenen Audiosignals;

einen vierten Eingang zum Empfang der parametrischen Transformierten des von dem Mikrophon, welches der zu behandelnden Person zugeordnet ist, abgegebenen Signals;

einen fünften Eingang zum Empfang des Audiosignals, das von einem dem Benutzer der Anlage zugeordneten Mikrophon abgegeben wurde; und

einen sechsten Eingang zum Empfang der parametrischen Transformierten des Audiosignals, das von dem Benutzermikrophon abgegeben wurde.

16. Anlage nach Anspruch 15, dadurch **gekennzeichnet,** daß sie zwei unabhängige Mischer/Addierer hat, eines für jedes Ohr der zu behandelnden Person.

17. Verfahren zum audiophonen Schulen von Personen unter Einsatz einer Anlage gemäß einem der Ansprüche 12 bis 16, dadurch **gekennzeichnet,** daß es die folgenden Schritte umfaßt:

a) Zuführen einer Mischung von verständlichen Tönen und von der Anlage gelieferten parametrischen Tönen zu jedem Ohr der zu behandelnden Person, wobei die verständlichen Töne in einem gewählten Takt von Pausen vorgegebener Länge unterbrochen sind;

b) Aufzeichnen der von der zu behandelnden Person als Antwort auf diese Zuführung abgebenen Tonsignale,

c) Anlegen des so aufgezeichneten Audiosignals an die Anlage, um es in ein parametrisches Signal zu wandeln;

d) erneutes Zuführen einer aus verständlichen Tönen und dem so gewandelten parametrischen Signal bestehenden Mischung zu jedem Ohr der zu behandelnden Person.

## Claims

1. Audiofrequency converter device, in particular for the audiophonatory teaching of patients, adapted for producing, from an audiofrequency signal (Oe) arriving at the input, a parametric signal (Ps) intended to be applied, through the intermediary of an electro-acoustic transducer, to a person to be treated, said device comprising:

   - means forming an input amplifier (AP, AP');

   - first means (DTS1) forming a threshold detector, these means being connected to the output (12) of the means forming an input amplifier (AP) and subtracting a voltage supplied by the latter, after conversion, from a threshold;

   - second means (DTS2) forming a threshold detector, these means also being connected to the output (14) of the means forming an input amplifier (AP, AP'), adding the voltage supplied by the latter, after conversion, to a threshold and possessing a time constant at least equal to that of the first means forming detector;

   - means (VCO) forming a voltage controlled oscillator, these means being connected to the output of the first means forming a threshold detector: and

   - means forming a modulator, of which the two inputs are respectively connected to the outputs of the second means forming a threshold detector and of the means forming an oscillator, and the output of which supplies said parametric signal, characterized in that:

   - the amplitude and/or the frequency of the parametric signal varies as a function of the logarithm of the amplitude and/or of the frequency of the audiofrequency signal.

2. Device according to Claim 1, characterized in that at least one of the first and second means forming threshold detectors comprises at least one resistance and diode network for causing the amplitude and/or the frequency of the parametric signal to vary as a function of the logarithm of the amplitude and/or of the frequency of the audiofrequency signal.

3. Device according to any one of the preceding Claims, characterized in that the time constant or constants of the first and/or second threshold detectors is an ascending function of the frequency of the audiofrequency signal.

4. Device according to any one of the preceding Claims, characterized in that the parametric signal is a complex signal comprising a fundamental frequency and a plurality of harmonic frequencies and in that the means forming a modulator are equipped with filtering means adapted for filtering the harmonics of said frequencies.

5. Device according to Claim 4, characterized in that the filtering means comprise a filter of the low-pass type, connected to the output of the means forming a modulator.

6. Device according to one of the preceding Claims, characterized in that the means forming an oscillator create a timing pulse signal having a form factor of the order of 0.5.

7. Device according to any one of the preceding Claims, characterized in that the audiofrequency signal is interrupted at a selected tempo of silences of predetermined duration.

8. Device according to Claim 7, characterized in that the chopping tempo of the audiofrequency signal is adjustable between 0.3 and 10 Hz.

9.  Device according to any one of the preceding Claims, characterized in that it is arranged to adjust the time constants of the first and second means forming a threshold detector in such a way that the larger remains below a predetermined value, this value being representative of a rhythmic sequencing taking into account the phonemes constituting the audiofrequency signal.

10. Device according to any one of the preceding Claims, characterized in that the means forming an input amplifier (AP, AP') comprise two amplifier stages, each proper for amplifying separately and independently of one another a respective audiofrequency signal Oe.

11. Device according to any one of the preceding Claims, characterized in that the amplitude of the parametric signal Ps is zero during the silences of the natural signal Oe.

12. Installation for the audiophonatory teaching of patients, characterized in that it comprises a converter device according to one of Claims 1 to 11.

13. Installation according to Claim 12, characterized in that it comprises, at the input of the converter, an input switch capable of being connected to a soundhead and/or to one or more microphones, and, at the output of the converter, an output switch capable of being connected to a sound reproduction chain and/or to a sound recorder.

14. Installation according to Claim 12 or Claim 13, characterized in that it comprises separate level adjustments for the two ears, in such a way that it is possible to inject, into each ear, a different mixture of parametric sounds and ordinary (comprehensible) sounds.

15. Installation according to one of the preceding Claims 12 to 14, characterized in that it comprises means forming a mixer-adder comprising:

    - a first input receiving the audiofrequency signal previously stored on a sound support;

    - a second input receiving the parametric transform of the thus stored audiofrequency signal;

    - a third input receiving the audiofrequency signal issuing from a microphone intended for the patient to be treated;

    - a fourth input receiving the parametric transform of the signal issuing from the microphone intended for the patient to be treated;

    - a fifth input receiving the audiofrequency signal issuing from a microphone intended for the usek of the installation; and

    - a sixth input receiving the parametric transform of the audiofrequency signal issuing from the microphone of the user.

16. Installation according to Claim 15, characterized in that it comprises two independent mixer-adders, one for each ear of the patient to be treated.

17. Process for the audiophonatory teaching of patients, using an installation according to one of Claims 12 to 16, characterized in that it comprises the following steps:

    a) injecting into each ear of the patient to be treated a mixture of comprehensible sounds and parametric sounds supplied by the installation; the comprehensible sounds being chopped at a selected tempo of silences of a predetermined duration;

    b) recording of the sound signals emitted by the patient to be treated in response to this injection;

    c) applying the audiofrequency signal thus recorded to the installation for converting it into a parametric signal;

    d) again injecting into each ear of the patient to be treated a mixture formed of comprehensible sounds and of the thus converted parametric signal.

FIG.1

FIG.2

EP 0 623 238 B1

Fig. 3

17

FIG.4

Fig. 5a

Fig. 5b

Fig. 5c

FIG.6

EP 0 623 238 B1